# EUROPEAN PATENT APPLICATION

(11) **EP 2 302 924 A2**
(43) Date of publication of application: **30.03.2011**
(21) Application number: 09729469.8
(22) Date of filing: 13.04.2009
(51) Int. Cl.: H04N 7/173

(54) **METHOD AND SYSTEM FOR PROVIDING INTERACTIVE CONTENT SERVICE OF UBIQUITOUS ENVIRONMENT AND COMPUTER-READABLE RECORDING MEDIUM**

(30) Priority: 11.04.2008 KR 20080033953
(71) Applicant: ITVMG, Seocho-gu Seoul 137-909 (KR)
(72) Inventor: SEO, Sung Ho, Seoul 137-767 (KR)
(74) Representative: Diehl, Hermann O. Th.
(86) International application number: PCT/KR2009/001883
(87) International publication number: WO 2009/126009

(57) **Abstract**

Disclosed are a method and a system for providing an interactive content service of a Ubiquitous environment, and a computer-readable recording medium. The system for providing an interactive content service of a Ubiquitous environment includes an information generator for receiving content transmitted from an information provider including a content providing medium, processing the received content such that a receiver implements a content service screen and/or a content service control function, and transmitting the processed content, and a network for providing communication between the information generator and the receiver.

## Description

### [Technical Field]

The present invention relates to a method and system for providing an interactive content service of a Ubiquitous environment, and a computer-readable recording medium, and more particularly to a method and system for eliminating a difficulty in the matching between platforms when implementing an interactive content service, and providing a service irrespective of service types, and a computer-readable recording medium.

### [Background Art]

In the broadcast communication convergence technologies, in keeping with increasing technological development, a variation in the demand of TV viewers, and diversification of provided content, multimedia environments are rapidly changing in recent times.

For example, analog broadcasting is transitioning to digital broadcasting, over-the-air broadcasting is diversified into cable broadcasting, satellite broadcasting, an IP-TV service for providing multimedia data over a superhigh-speed communication network, a Digital Multimedia Broadcasting (DMB) service, etc.

Under the aforementioned digital broadcast communication environment, legacy audio/video (A/V) broadcast signals, and various digital broadcast applications and additional data can be transmitted. In addition, interactive services can be implemented and provided because of interaction between networks.

Interactive services can be easily used by users or viewers through various receiving terminals such as a TV and a Set-Top Box (STB), such that the interactive services are of importance to the digital broadcasting and the extension of service.

In digital broadcasting, a headend (H/E) system divides decoded A/V and broadcast service signals into fixed packet sizes within a prescribed bandwidth, and transmits the fixed-packet-sized signals to a receiver. The receiver combines the received signals, and processes the combined signals as a digital broadcast service. In this case, the processing of multiple channels and multiple programs and the execution of applications are simultaneously processed.

Specifically, when attempting to use a service not stored in a receiving terminal, the entirety of the service is newly downloaded over a network and executed. In this case, the transmitting and executing speed of the service may be decreased. It may be impossible for the service application to be performed because of lost packets encountered during communication. In addition, because the receiving terminal has little processing power, a service that is not stored in the receiving terminal cannot provide various services and high resolution.

### [Disclosure]

### [Technical Problem]

Accordingly, the present invention is directed to a method and system for providing an interactive content service of a Ubiquitous environment, and a computer-readable recording medium, that substantially obviate one or more problems due to limitations and disadvantages of the related art.

Therefore, the present invention has been made in view of the above problems, and it is an object of the present invention to provide a method for processing content for use in a service so as to allow a receiving terminal to easily use the content, and transmitting the processed content so as to solve a variety of problems. Exemplary problems encountered in the related art are as follows. Owing to the large number of man hours consumed in content development and different technical standards of individual mediums, the related art has difficulty in implementing compatible content, suffers from QoS (Quality of Service) deterioration caused by limitation to a network bandwidth, has a limited amount of available content due to low specification of a receiving terminal, has limited content execution speed, and has difficulty in matching service content through the receiving terminal. In accordance with the related, art, if service content is changed, the side effect occurs in the receiving terminal and the re-matching issue also occurs therein. In contrast, the embodiments of the present invention can solve the aforementioned problems encountered in the related art.

### [Technical Solution]

The object of the present invention can be achieved by providing a system for providing an interactive content service of a Ubiquitous environment including: an information generator for receiving content transmitted from an information provider including a content providing medium, processing the received content such that a receiver can control a content service screen and/or a content service control function, and transmitting the processed content; and a network for providing communication between the information generator and the receiver.

In another aspect of the present invention, provided herein is a method for providing an interactive content service of a Ubiquitous environment including: a) receiving content from an information provider including a content providing medium; b) processing the received content such that a receiving terminal implements a content service screen and/or a content service control function for the content; and c) transmitting the processed content to the receiver over a network.

In addition, other methods for implementing the present invention are provided, and a computer-readable recording medium including a computer program for executing the system and any one of methods described in the attached claims is also provided.

### [Advantageous Effects]

According to embodiments of the present invention, a platform enterprise can obtain the following advantages irrespective of technical standards between mediums. First, contents can be easily compatible, anda wide-range of Web-content can be easily compatible (i.e., content conversion can be performed simply using Web-site addresses), such that the integrated management of content information and the facilitation of service provision (beneficial to an MDP service, etc.) can be guaranteed. In addition, content can be infinitely extended irrespective of receiving terminal specifications. That is, the related art is limited to content that is stored and serviced in a receiving terminal due to restrictions of receiving terminal hardware (e.g., storage unit, memory, RAM, etc.). In contrast, the embodiments of the present invention can solve the aforementioned limitations.

Therefore, the present invention can curtail expenses for constructing the receiving terminal, and reduce the content matching period. That is, the legacy service may generate a variety of matching problems when the receiving terminal changes the content service to another service, and may previously prevent the occurrence of not only the side effect caused by shape modification but also exclusive items. As a result, service launcth time is reduced and the facilitation of service change is guaranteed.

In the meantime, users and viewers can obtain the following effects. First, owing to One Source Multi-Use between mediums, facilitated compatibility of Web-content, reduction of service development time, and rapid matching between receiving terminals, the performance of the receiving terminal can be improved, and universal content can be provided to not only personal broadcasting but also the multimedia.

The present invention can allow a broadcast communication enterprise to immediately use content irrespective of platforms or inter-media characteristics. In addition, the broadcast communication enterprise can easily receive content from a CP and a DP, such that the policy and planning of services can be easily configured and changed.

In accordance with the present invention, the content service providing enterprise such as a CP or a DP can simplify a service upload method, and reduce service matching expenses and additional expenses required for service change. In addition, the present invention can apply services irrespective of platform and media types, such that costs for diversification of platforms and mediums can be greatly reduced.

In the meantime, according to the present invention, consumers or users can access and use a variety of content, and their personal broadcasting is made available, such that each user may also serve as a prosumer who provides/produces information while simultaneously consuming information.

The digital multimedia service is configured in the form of a walled garden in which the service provider generally has a closed format. In accordance with the walled-garden shaped service, the service provider can easily lead the billing and service policies, and the service user inevitably encounters various problems, for example, the absence of content, the unreasonable billing, etc. In contrast, the present invention can effectively construct a walled-garden based service and an open-content based service, such that the range of Ubiquitous digital markets can be extended.

### [Description of Drawings]

The accompanying drawings, which are included to provide a further understanding of the invention, illustrate embodiments of the invention and together with the description serve to explain the principle of the invention.

In the drawings:
FIG. 1 is a block diagram illustrating a system for providing an interactive content service of a Ubiquitous environment according to one embodiment of the present invention.
FIG. 2 is a block diagram illustrating some elements of an information provider for providing an interactive content service of a Ubiquitous environment according to one embodiment of the present invention.
FIG. 3 is a flowchart illustrating an encoding process in response to a user input according to the present invention.
FIG. 4 is a block diagram illustrating detailed elements of a receiving terminal according to the present invention.
FIG. 5 is a flowchart illustrating the process of generating a new service content according to the present invention.
FIG. 6 shows examples of services for each medium that can be executed by a flexible browser according to the present invention.
FIGS. 7 to 9 shows examples of a process for generating a new service content according to the present invention.
FIG. 10 is a flowchart illustrating a method for employing a flexible browser according to the present invention.
FIGS. 11 and 12 show application examples of the flexible browser according to the present invention.
FIG. 13 shows an example of a content encoding method according to the present invention.
FIG. 14 is a conceptual diagram illustrating an example for encoding changed response information according to the present invention.
FIG. 15 shows an example for encoding response information about a fixed region according to the present invention.
FIGS. 16 and 17 show examples for encoding response information about a fixed region according to the present invention.
FIG. 18 is a flowchart illustrating method for performing pop-up processing of an open content using a flexible browser according to the present invention.
FIG. 19 shows an example for establishing synchronization between a remote-controller event and a server content function according to the present invention.

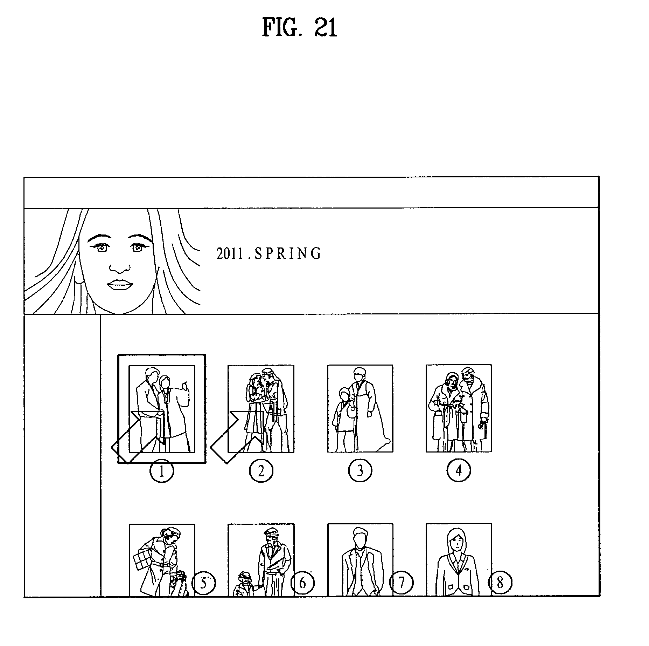

FIGS. 20 and 21 show other examples for establishing synchronization between a remote-controller event and a server content function according to the present invention.
FIG. 22 is a conceptual diagram illustrating a method for mapping screen division information using number buttons according to the present invention.
FIG. 23 shows a number keypad input unit contained in an input unit according to the present invention.
FIG. 24 shows an application example applied to a baduk service according to the present invention.
FIG. 25 shows an example for performing division navigation of a Web-site in an open content according to the present invention.
FIG. 26 is a flowchart illustrating a navigation process according to the present invention.
FIG. 27 is a block diagram illustrating personal broadcasting according to the present invention.
FIG. 28 is a flowchart illustrating a system operation process for use in personal broadcasting according to the present invention.
FIG. 29 shows an example for interaction between a general system and an event according to the present invention.
FIGS. 30 to 33 show examples for controlling detailed schedules within a single content according to the present invention.
FIG. 34 is a flowchart illustrating operations of a distribution processor according to the present invention.

### [Best Mode]

Reference will now be made in detail to the preferred embodiments of the present invention, examples of which are illustrated in the accompanying drawings. The detailed description, which will be given below with reference to the accompanying drawings, is intended to explain exemplary embodiments of the present invention, rather than to show the only embodiments that can be implemented according to the present invention. Although various embodiments of the present invention are different from one another, it should be understood that the embodiments need not be exclusive to one another. For example, specific forms, structures, and characteristics described herein can be implemented as other embodiments without departing from the spirit and scope of the present invention. In addition, it should also be understood that positions and arrangements of individual constituent elements of the embodiments can be changed and modified without departing from the spirit and scope of the present invention. Therefore, the following detailed description is not limited only to the embodiments of the present invention, and it is intended that the present invention cover the modifications and variations of this invention that come within the scope of the appended claims and their equivalents. In the drawings, in order to clearly describe the present invention, the same reference numbers will be used throughout the drawings to refer to the same or like parts.

Although the terms "first", "second", etc. may be used to describe various elements, components, areas, layers, or zones, it should be noted that the elements, components, areas, layers, or zones are not limited only to the terms, and may also be denoted by other terms as necessary.

In the following embodiments of the present invention, a broadcast communication system and a receiving terminal device to be exemplarily described are applied to all devices related to a broadcast communication system, for example, a TV, a personal computer, a PCTV, an STB (set-top box), a PVR or a DVR, such that the scope or spirit of the present invention is not limited only to specific systems and hardware devices.

In addition, the present invention can be applied to all digital content services provided to a terminal using digital storage media, for example, a digital TV, a VOD, an AOD, an Internet service, a digital home service, a PVR, a DVR, etc.

Hereinafter, the embodiments of the present invention will be described in detail with reference to the accompanying drawings so as to be easily implemented by those skilled in the art. However, the present invention may be variously implemented and is not limited to the embodiments described herein.

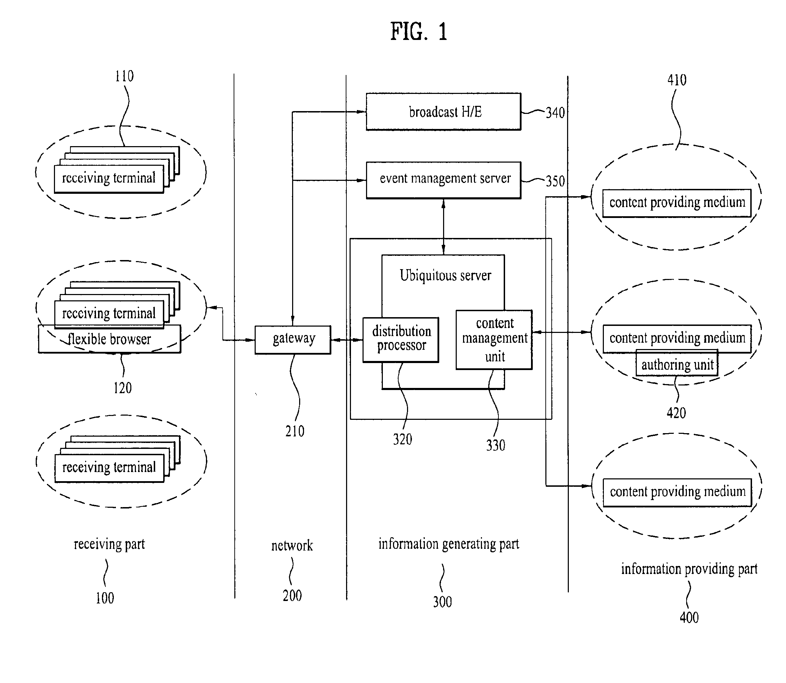

FIG. 1 is a block diagram illustrating a system for providing an interactive content service under a Ubiquitous environment according to one embodiment of the present invention.

Referring to FIG. 1, the system according to the present invention may include a receiving part 100, a network 200, an information generating part 300, and an information providing part 400. In this case, the information generating part 300 may include a Ubiquitous server 310.

The receiving part 100 includes a plurality of receiving terminals 110. The receiving terminal 110 including a remote broadcast client irrespective of broadcast media (e.g., terrestrial broadcasting, satellite broadcasting, cable broadcasting, DMB, WiBro, WWW, PDA, etc.) receives content from the Ubiquitous server 310, and provides service screen images and service functions.

The receiving terminal 110 includes a flexible browser 120 for executing content received from the Ubiquitous server 310. The flexible browser 120 communicates with the Ubiquitous server 310 irrespective of receiving terminals of individual mediums, such that it can perform proper functions.

The network 200 may use a gateway 210 to take charge of communication between the information generator 300 and the receiving unit 100. The gateway 210 may perform user authentication and network load balancing (load distribution) functions.

As described above, the information generator 300 provides service screen images and functions to the receiving unit 100 using content received from the information provider 400.

The information generator 300 may further include a distribution processor 320, a content manager 330. The distribution processor 320 may perform load distribution functions (channel management, session management, service information transmitting/receiving and service resource management). For example, the load distribution may be channel distribution for use in a broadcast service.

Meanwhile, the information providing part 400 may include a medium and system (such as a medium of the receiving part 100) for providing information on terrestrial broadcasting, satellite broadcasting, cable broadcasting, DMB, WIBRO, WWW, PDA, etc.

The content providing medium 410 contained in the information providing part 400 may include an authoring unit 420 configured as hardware (H/W) and software (S/W), such that data can be easily converted and content can be easily uploaded. Revenue generated by the uploaded and registered content may be shared with a content providing medium under the control of the entire service provider.

Detailed descriptions of the information provider 300 are as follows.

First, the broadcast headend (H/E) 340 manages, compresses, multiplexes broadcast sources (audio, video and data), and transmits the resultant broadcast sources to the receiving terminal 110 over the network 200. The event management server 350 manages channels and schedules of broadcast programs, matches the channels and schedules to the sources of the broadcast H/E 340, compresses and multiplexes the matched result, and transmits the resultant channels and schedules to the receiving terminal 110.

Therefore, as described above, the receiving terminal 110 processes the broadcast sources received from the broadcast H/E 340, and provides the corresponding service to the user.

In this case, the Ubiquitous server 310 may perform mapping of schedules and compilation information of the interactive service to be provided using event information of the event management server 350.

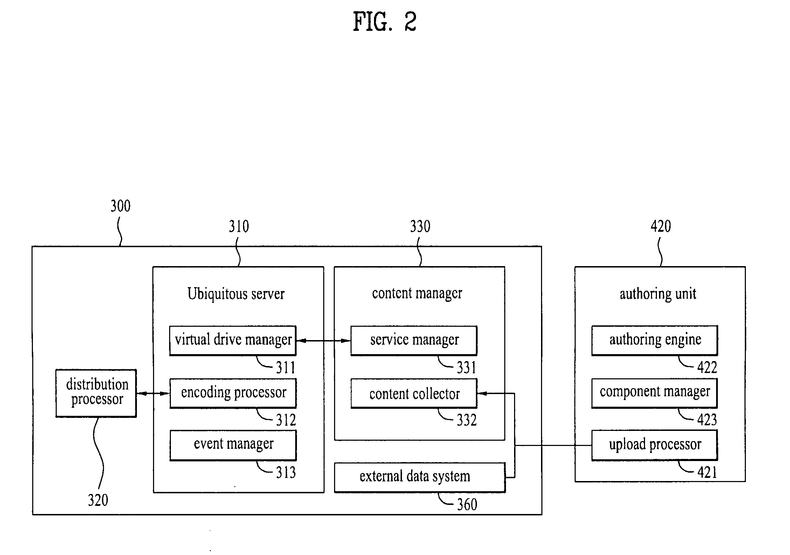

Detailed description and principal functions of the information generator 300 according to one embodiment of the present invention will hereinafter be described with reference to FIG. 2.

Referring to FIG. 2, the information generator 300 includes the Ubiquitous server 310, and the Ubiquitous server 310 includes a virtual drive manager 311. The virtual driver manager 311 analyzes categories and values of input signals of the receiving terminal 110, and manages generation of data corresponding to each request.

As an example of the virtual drive manager 311, an MSHTML component, WebBrowser component, etc. may be used. Each user input signal requested for the Ubiquitous server 310 may be processed using such a management module, etc.

In this case, the user input signal may be generated through an input interface of the receiving terminal 110 for each medium. The virtual drive manager 311 analyzes the input signal received from the receiving terminal 110, and generates response information to the analyzed input signal.

After that, the virtual driver manager 311 generates either displayed video information or output audio information as response information on the basis of the aforementioned input signal, and transmits the response information to the encoding processor 312.

The encoding processor 312 configures source and metadata to be transmitted according to a protocol such that the source and metadata can be processed in the flexible browser 120 (See FIG. 1). Thus, the source and metadata are encoded into appropriate information for each medium according to attributes of the receiving terminal 110.

The service provided to the user may include content information such as audio/video/data (A/V/D) and mapping information for scheduling the content information. The event manager 313 may include indication information such as a channel, program schedule information such as compilation information, content management information, and screen configuration information of the transmitted content. In addition, the event manager 313 may interact with other systems. For example, a function for interacting with programming information of the broadcast system may interact with a function that interacts with not only content channel information but also the event management server of the schedule information system.

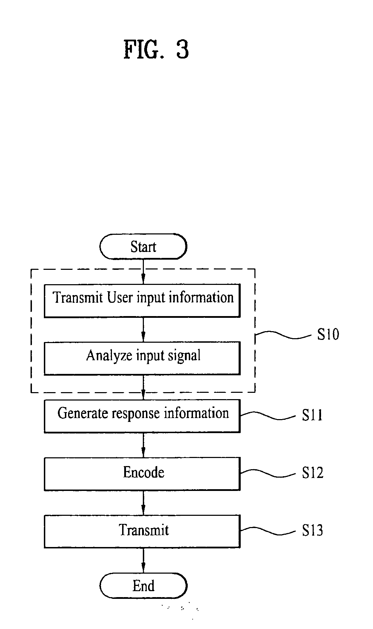

The information encoding process in response to a user input through the encoding processor 312 contained in the Ubiquitous server 310 according to one embodiment of the present invention will be described hereinafter with reference to FIG. 3.

First, when transmitting user input information, the user input information is generated through an input interface of the receiving terminal 110. This user input information is requested from the Ubiquitous server 310 over the network 200, and is transmitted to the virtual drive manager 311.

In this case, input information may be differently established according to individual mediums, and may be generally comprised of navigation information and other additional information.

The navigation information may be classified into direction information such as Up/Down/Left/Right/Confirm/Number buttons and color keys such as function information. In this case, the additional information may be user information that is generated in the receiving terminal 110 and transmitted.

In the case of transmitting the user input information as described above, the input signal is analyzed at step S10. In this case, the virtual drive manager 311 analyzes the input signal, executes each service of the service manager 331 contained in the content manager 330, and generates response information. Each input signal may be managed for each receiving terminal 110, and may be processed without overlapping with other input signals.

Next, response information about the user input information is generated at step S11. The response information may include video and audio information. In this case, the video information may be classified into screen configuration information, images, text, etc.

The response information may be related to the execution of the entire response (i.e., full response). In the post-processing, the response information may be information about the changed parts.

In this case, the subject for generating the response information can manage the entire service of the content manager 330 using a specific service form such as a walled garden.

The virtual drive manager 311 can execute the service which is received by the content manager 330. However, in accordance with the open service form such as the Web, the virtual drive manager 311 may directly execute the service, and generate response information as necessary.

The response information is encoded with additional information at step S12, and is transmitted to the distribution processor 320. The additional information may include synchronization information of response information or event information such as programming information. In addition, the additional information may include interaction information that constructs each service. The event manager 313 generates encoding information by referring to channels and program information of the corresponding content.

Meanwhile, unique characteristics (screen configuration method, screen resolution, etc.) specific to the receiving terminal 110 for each medium may be present. In the encoding of the present invention, the unique characteristics of individual mediums are considered.

The encoded information is transmitted to the distribution processor 320 at step S13. The distribution processor 320 transmits content information to the receiving terminal 110 over the network 200 such as the gateway 210.

Detailed constituent elements of the content manager 330 according to the present invention will hereinafter be described with reference to FIG. 2. The service manager 331 manages the service source transmitted to the Ubiquitous server 310. In addition, the service manager 331 may drive content in the configuration of an internal enterprise service such as a walled garden service.

The content collector 332 manages and analyzes utilization information of individual services collected in the Ubiquitous server 310. The content collector 332 can receive service content provided from the CP and the data provider according to the analyzed user input information. When uploading the service content, the content collector 332 can verify whether content is normally configured (if necessary, the upload processor 421 of the authoring unit 420 may also verify the normal or abnormal configuration of the content).

In addition, the content collector 332 may obtain information from the external data system 360, and use the obtained information. For example, the external data system may be a Subscriber Management System (SMS), and the SMS may manage information about subscribers who use services of the enterprise.

The content collector 332 may perform a 1:1 target service and marketing such as target marketing using subscriber information of the SMS of the external data system 360, service usage information, etc. In addition, the content collector 332 may configure a system (MDP service) that can distribute service usage fees to information providers (e.g., CP, DP, etc.) using service usage information, etc.

Detailed constituent elements of the authoring unit 420 have been described in Korean Patent Application No. 10-2004-0016706 filed by the applicant of the present invention.

A template may be used as the authoring engine 422 of the authoring unit 420. The authoring unit 420 can easily generate the service content through a simple operation that employs a component received from the component manager 423.

The authoring engine 422 provides a variety of management functions, for example, image, text, and sound control functions, video editing functions, etc. The application generated through the authoring engine 422 may be written in various languages, for example, HTML, XML, Java, etc.

The authoring engine 422 may generate either the application source or compiled binary code.

For the developer's convenience, the component manager 423 may configure the frequently used functional modules in the form of a package, and provide the packaged functional modules to the developer. The component or template further includes a system such as a live update server, such that it may obtain change or modification information such as a new version, etc. As a result, the component manager 423 may provide new component and management functions.

In particular, when encoding a structure (such as ActiveX or security module) so as to reconfigure various constituent elements of the open content, the component manager 423 may process the encoded structure to be compatible with the flexible browser 120.

Content generated by the authoring engine 422 may be uploaded to the content collector 332 through the upload processor 421. In this case, various protocols, such as FTP, HTTP, etc. may be used.

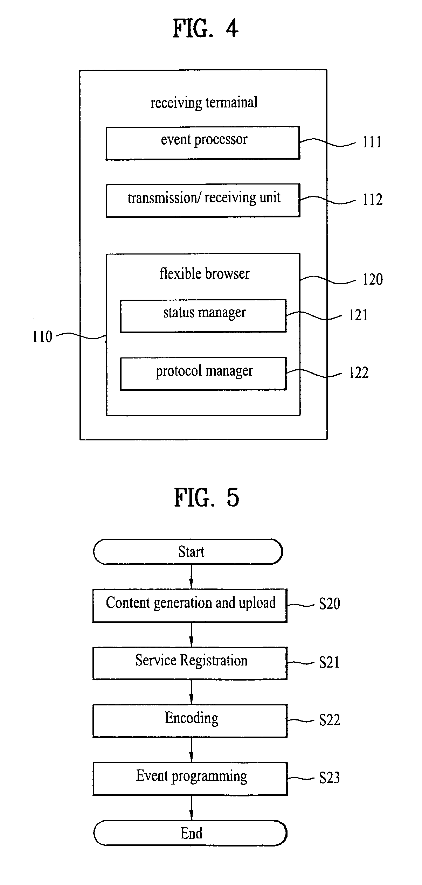

Detailed configuration of the receiving terminal 110 according to one embodiment of the present invention will hereinafter be described with reference to FIG. 4.

Referring to FIG. 4, the receiving terminal may include an event processor 111 for receiving an input event from a user remote controller or an interface device designed to receive a usage signal. The event processor 111 may be generally a middleware- and hardware- based processing unit contained in the receiving terminal 110.

The flexible browser 120 receives an input signal from the event processor 111, and uses the received input signal.

In addition, the receiving terminal 110 may include a transmitting/receiving unit 112 that can be networked to another system. The flexible browser 120 communicates with the Ubiquitous server 310 using functions of the transmitting/receiving unit 112, and uses information about other systems.

The flexible browser 120 may include a status manager 121, and manage the execution/termination of the received content service. In addition, the programming information of the event processor 111 and the processing of content's screen variation may be processed by the flexible browser 120. The list and entry paths of individual content may also be managed by the flexible browser 120 according to the service configuration.

In addition, the management function of the screen may be carried out by the status manager 121. For example, under the condition that a corresponding video region is PIP (Picture In Picture)- processed under the A/V broadcast receiving status or the corresponding video region returns to an original status, and various applications are activated under a broadcast receiving status, the overall processing of the screen may be carried out in the same manner as in the screen processing part.

In this way, the flexible browser 120 transmits the corresponding attribute information to the Ubiquitous server 310 on the basis of medium attribute information for each medium, receives appropriate content information, and indicates the received content information.

The protocol manager 122 may transmit a request to the Ubiquitous server 310 or configure additional information generated in the receiving terminal 110 in the form of a protocol, and transmits the protocol-format additional information. In addition, the protocol manager 122 analyzes data of the protocol received from the remote broadcast server, outputs the analyzed data on the screen of the receiving terminal 110 and invites the user to use this data.

Metadata, that is generated by the Ubiquitous server 310 and the remote broadcast client and is transmitted /received, can be configured in the form of an effective protocol structure according to message categories and content utilization.

An example of the protocol is shown in Table 1. Detailed items of the protocol may be changed according to the service function and the system extension. Detailed descriptions of individual fields are shown in the following Table 1.

**[Table 1]**

| Field Name | Field Size | |
|---|---|---|
| Message ID | 8 bits | |
| Return_Type | 4 bits | |
| Message Version | 4 bits | |
| Message Length | 4 bits | |
| Service_ID | 8 bits | |
| Message_Type | 4 bits | |
| Number_Descriptor | 8 bits | |
| Descriptor | Field Name | Field Size |
| | Description type | 4 bits |
| | Description_length | 4 bits |
| | Description Message[] | X bytes |
| Data_Structure_Type | 4 bits | |
| Number_Segment | 4 bits | |
| Data_Segment | Field Name | Field Size |
| | Compression Type | 4 bits |
| | Number Type | 4 bits |
| | Compression string byte[] | X bytes |
| Data_extension | x bits | |
| CRC_32 | 32 bits | |

MessageID : MessageID may be adapted to identify a message used in the system of the present invention, and each message may have a unique value at each corresponding time point.

Return_Type : Return_Type has a value that can identify whether an objective message is generated from any one of the Ubiquitous server 310, the remote broadcast client, and another system.

Message_Version : Message_Version records a version value of a message therein.

Message_Length : Message_Length records a total length value of a message therein.

Service_ID : Service_ID discriminates a unique ID of a content service employing a message.

Message_Type : Message_Type discriminates a message type. The Ubiquitous server 310 may transmit an operation message, a data message, an event type message, a real-time change message, etc.

Number_Descriptor : Number_Descriptor transmits additional data configured in the form of a Descriptor so as to simultaneously transmit additional information according to a message type. In addition, Number_Descriptor may represent the number of descriptors.

Description_Type : Description_Type indicates a description type.

Description_Length : Description_Length indicates the length of the description.

Description_Message[ ] : Description_Message[ ] indicates actual DescriptionData.

Data_Structure_Type : Data_Structure_Type can classify data used in application according to data types, and transmit the classified data. Images (e.g., bit map, JPEG, etc.), multi-language text information (e.g., Korean, English, Japanese, Chinese, etc.), audio data, and a pre-compiled execution file available for application may be used as exemplary data types.

The pre-compiled execution file is in binary format, and is transmitted to the receiving terminal 110. When the execution file is loaded in the flexible browser 120, the compiling step may be removed, such that the execution file can be immediately executed upon loading completion. In addition, a storage space of the receiving terminal 110 is not utilized, such that a service can be easily configured irrespective of specifications of the receiving terminal 110.

Number_Segment : Number_Segment displays the size of data.

Compression_Type : Compression_Type identifies a compression method.

Compression_String_Byte[ ] : Compression_String_Byte[ ] includes actual compressed data.

Besides, the protocol items may further include a unique ID of the receiving terminal 110 and a flag value for indicating a status of the receiving terminal 110. Identification data for processing an event of an input signal received from the user input device may also be configured and contained in the protocol items.

In addition, BackGround Music (BGM) and synchronous (Sync) information about the simple effect sound may be configured.

A method for generating new service content using a legacy walled garden scheme will hereinafter be described in detail. A method for registering a service contained in a service provider using the walled garden scheme is shown in FIG. 5.

A connectable address is an example of the virtual channel system and is able to use an address of a Channel Domain System (CDS) that is filed and registered by the applicant of the present invention. In this case, the corresponding open content needs to be registered in the CDS server.

If it is assumed that allocation of a virtual channel is performed according to the CDS method and only the content usage caused by the virtual channel is provided according to the CDS method, the open content can be configured in the form of a walled garden. It is possible to block illegal information (illegal information (adult and gambling information) improper for broadcast communication), and to limit the usage of the open content vulnerable to security.

In contrast to the walled garden, the open content need not perform service registration, and is able to provide a necessary service by specifying a URL and connectable address in general content.

FIG. 5 is a flowchart illustrating the order of generating new service content according to the present invention.

Referring to FIG. 5, content to be registered is generated through the authoring unit and the verified content is uploaded to the content manager at step S20.

After that, the uploaded service is registered in the service manager 331 (See FIG. 2) at step S21. The registered content includes a variety of resources (e.g., sources and images), functions of the service, etc., and the shape of the registered content is managed. When changing the content or service, the service can be managed by updating a service version.

In this way, the service registered in the service manager 331 is transmitted to the encoding processor 312 of the Ubiquitous server 310, and the encoding processor 312 performs the encoding operation so as to transmit encoded data to the receiving terminal 110 at step S22. In the encoding process, the optimization operation suitable for each medium feature is performed. The encoded service content is transmitted to the distribution processor 320 as described above.

The registered service performs programming of events, for example, indication information like a channel, transmission time point like a broadcast or transmission time point, a schedule event, etc., at step S23. In addition, through the setup of pay-for-use accounting such as a service package, the authority may be established.

The reason why the encoding operation is performed ahead of the event programming is that a user may generate a request under the condition that data is not encoded. As soon as the user request is received, the encoding is performed and a necessary service is provided.

In accordance with the embodiment of the present invention, if the channel and event are changed, this changed information may be transmitted in real time to the receiving terminal 110. In addition, a transmission time point of the changed information may be set to a specific time point (at which a service change confirmation request is received from the receiving terminal).

If the event programming is completed as described above, the receiving terminal 110 is ready to use the corresponding service.

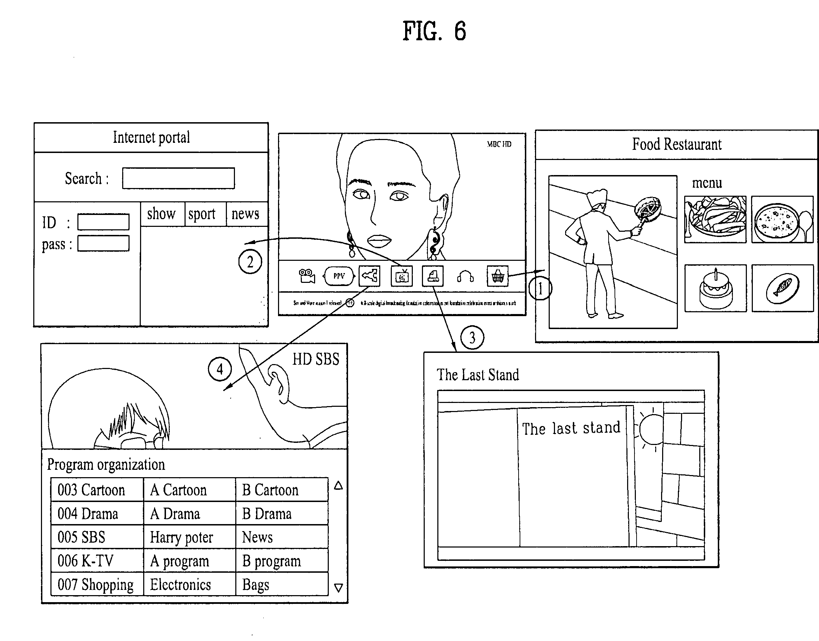

FIG. 6 shows examples of service for each medium that can be executed by a flexible browser according to the present invention.

Examples of services of individual mediums capable of being executed by the flexible browser will hereinafter be described with reference to FIG. 6.

Referring to FIG. 6, a legacy broadcast communication application may be performed (See ① of FIG. 6). In the corresponding service, service information, that is driven and requested by a system of the present invention, is encoded and transmitted to the flexible browser 120.

In addition, a variety of portals and Web-content of the Internet service are encoded according to the receiving terminal 110 for each medium, such that the encoded portals and Web-content are transmitted to the receiving terminal 110 for each medium and are displayed on the screen by the flexible browser 120 (See ② of FIG. 6).

PC-based flash content may be encoded and serviced (See ③ of FIG. 6). EPG information is processed by a service administrator of the content manager of the remote broadcast system, the corresponding EPG information is encoded by the encoding processor, and the encoded information is transmitted to the client and is displayed on the screen (See ④ of FIG. 6).

In addition, a variety of applications may be used, for example, application to game content of a mobile or portable game machine.

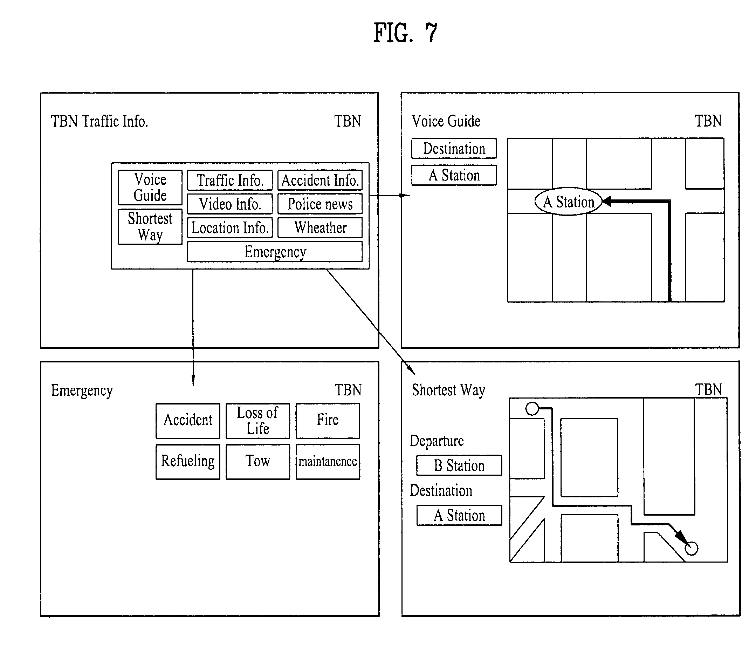

The order of generating new service content will hereinafter be described with reference to FIG. 7. For convenience of description, the order of generating the new service content will hereinafter be described in detail by referring to an example of the walled garden service.

Referring to FIG. 7, various functions configured in the form of menus related to low-order screens are provided over the entire screen. Menus of individual functions configure a User Interface (UI) in such a manner that the menus are focused by input devices of the receiving terminal. If any one of the menus is selected by the input device, the displayed screen is shifted to the low-order screen.

FIG. 7 shows an example of the walled garden service. Specifically, FIG. 7 exemplarily shows a traffic information service. A variety of buttons for the switching to the low-order screen are displayed on the main screen of the traffic information service.

In this case, if the user selects a function of each button, the main screen is switched to the low-order screen. Each low-order function displays screen constituent elements and data. An initialization function for the switching to the main screen may be provided on each low-order function.

The order of generating new service content will hereinafter be described in detail, and exemplary services capable of being simultaneously applied to the walled garden and the open content will hereinafter be described in detail.

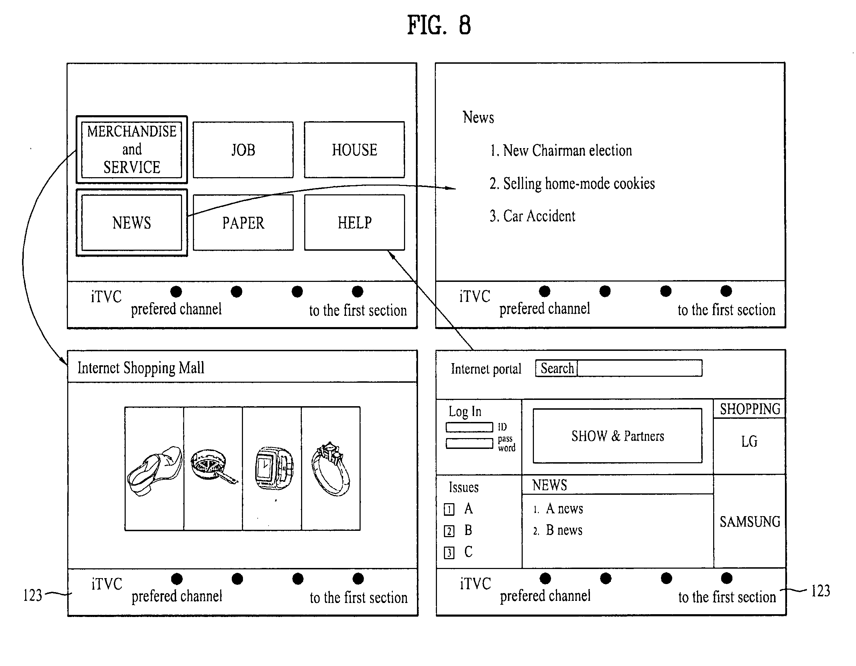

FIG. 8 shows a first example of a service in which the open-content function is added to the walled garden service function. 5 menus from among 6 menus are low-order services of the walled garden service, and one menu is designed to move to the Internet shopping mall.

When selecting the commodity and service menu, the flexible browser queries the Ubiquitous server for the corresponding site. The virtual drive manager of the Ubiquitous server receives information of the corresponding site, configures the received information in the form of a protocol, and receives the configured protocol through the distribution processor.

When moving to the open content, it is difficult to return to the walled garden service or the service provider's service, such that it is preferable that the corresponding function be arranged on the UI 123.

That is, if the user clicks on a specific button "to First Page" of the UI 123, the display image may be switched to the initial image of the walled garden service.

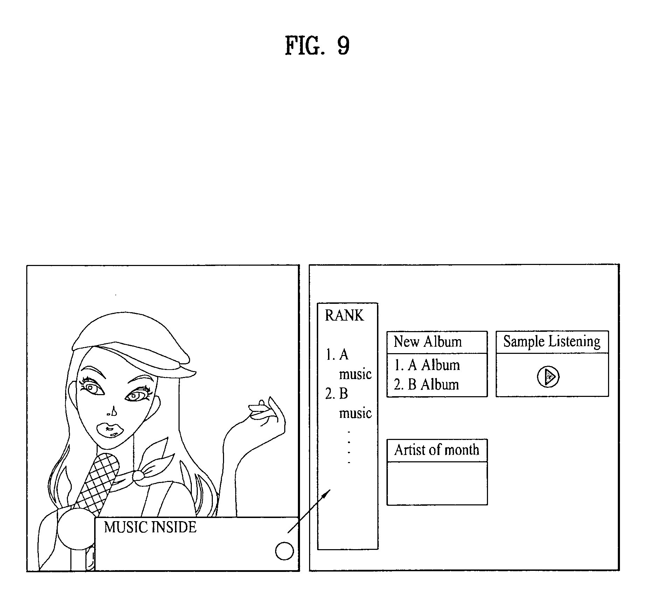

FIG. 9 shows a second example of the service that can be simultaneously applied to both the walled garden and the open content. That is, FIG. 9 shows another example of the walled garden service. When the user views general A/V broadcast data, the display image is switched to the open content.

When the user views broadcast data of the music channel, the Ubiquitous server transmits a function for switching the corresponding channel to the open content is transmitted to the receiving terminal.

In this case, the flexible browser of the receiving terminal receives a corresponding signal, and displays it on one side of the screen. If the receiving terminal receives a specific input signal, it performs the switching to a Web-site of the music channel. After employing the promotion of the Web-site, the receiving terminal returns to the A/V channel.

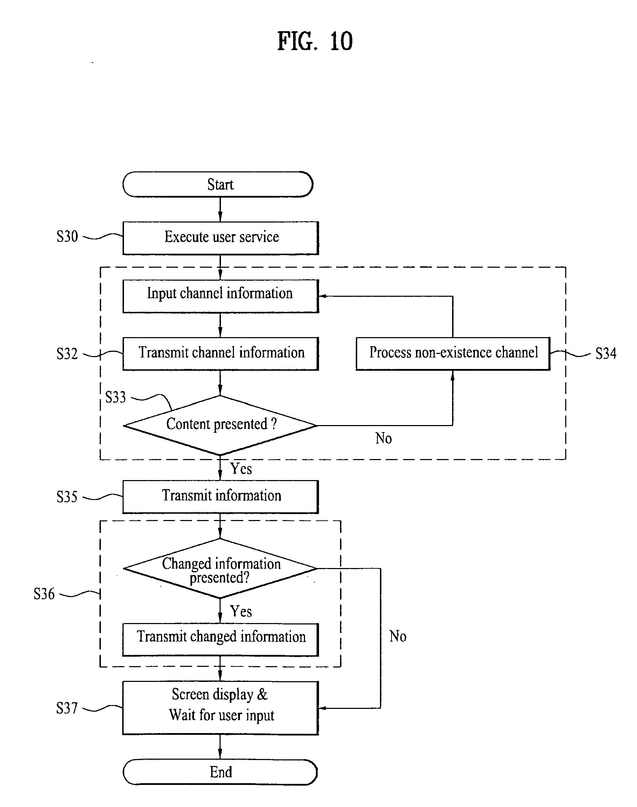

A method for processing the flexible browser will hereinafter be described with reference to FIG. 10.

FIG. 10 is a flowchart illustrating a method for employing a flexible browser according to the present invention.

First, if the user or viewer selects a service and executes the selected service by selecting the flexible browser, the flexible browser is executed such that the service is performed at step S30. The selected service is a flexible browser, the flexible browser may be a menu (index) application and also provide an entry path function for executing the service application such as a PPV Portal, an EPG, a VOD portal, a game, a baduk, a weather, regional information, etc.

Next, channel information is input at step S31 and this channel information may be directly input through number buttons of the input unit or character input actions, etc. In addition, the channel information may be provided in the form of a menu and be indirectly selected through the menu.

During the aforementioned process, another process for checking the presence or absence of a corresponding channel may be further executed.

That is, the input channel information is transmitted to the Ubiquitous server at step S32. The event manager of the Ubiquitous server checks channel and programming information. It is determined whether the requested content and channel information are present in the event manager, and the determined result is transmitted to the receiving terminal.

In this case, the programming information such as channel line-up may be present in the memory of the receiving terminal. Therefore, the process for determining whether the content is present or not may further include a process for verifying the memory of the receiving terminal.

If there is no channel at step S33, information indicating that a channel or content is not present on the screen is displayed such that the viewer can recognize the absence of the channel or content at step S34.

After that, the client transmits information of the service content at step S35, and the information of the service content is displayed on the receiving terminal.

In this case, after receiving the service content, some information may be changed. Therefore, in relation to information of the changed service content, the Ubiquitous server transmits this service content information to the receiving terminal at step S36.

Upon completion of transmission of the service content information, the flexible browser displays the received information on the screen, and awaits user input at step S37.

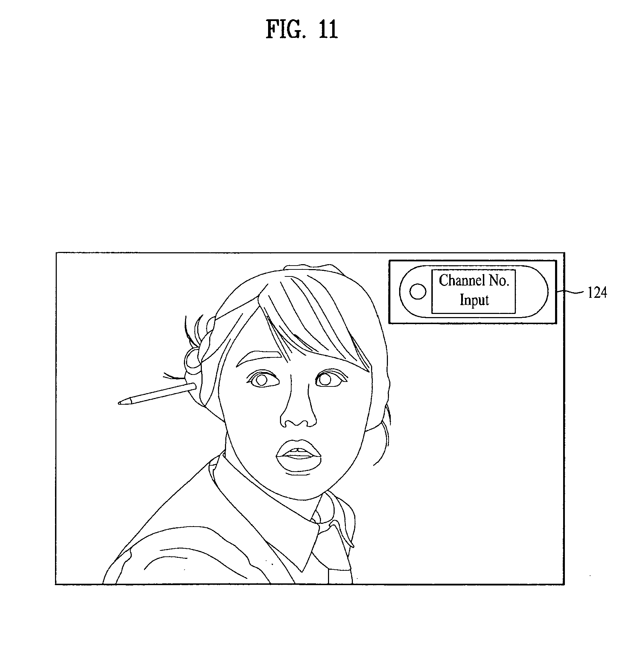

FIG. 11 shows an application example of the flexible browser, and an example of the flexible browser for directly receiving the channel number will hereinafter be described with reference to FIG. 11.

The flexible browser may be configured in a specific form having no UI. The flexible browser may have a function for managing a service lifecycle and service resources, and may also configure the UI based on this function for user convenience.

In the broadcasting embodiment, if the user or viewer views the A/V broadcasting and presses a specific key (i.e., a green button of the input unit), the flexible browser is displayed on the screen and the focus moves to the channel input part 124 designed to receive a channel input. If the user presses the specific key once again, the channel input part 124 is toggled, such that the client disappears from the screen.

A channel to be input and processed may be a legacy A/V channel, a virtual channel allocated to application, a low-order screen of the application, etc.

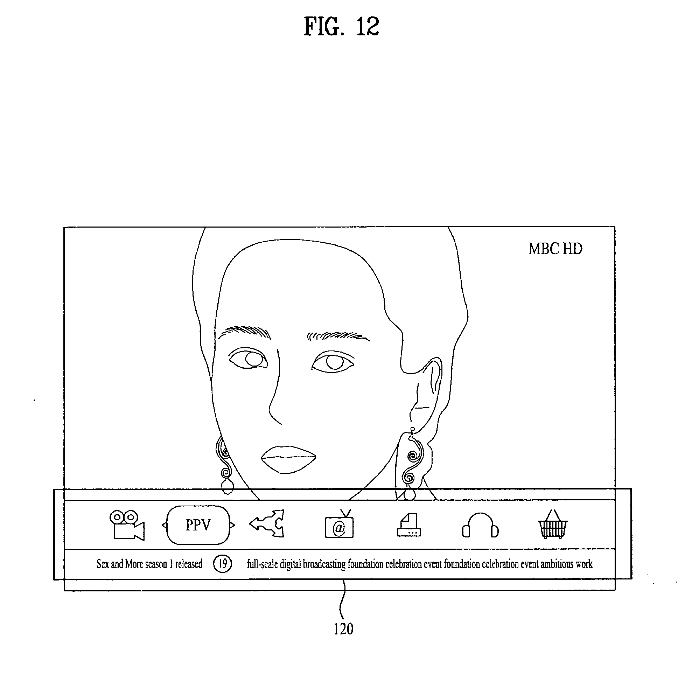

An example of the flexible browser for indirectly selecting a necessary service configured in a menu form will hereinafter be described with reference to FIG. 12.

If the user views the A/V broadcast and presses a specific key (menu button), the flexible browser 120 is displayed on the screen. In order to allow the user to select a desired service, the flexible browser 120 is displayed on the screen. If the user presses a specific key once again, the flexible browser 120 is toggled off so as to disappear from the screen.

The service content that can be mapped in a menu format to the flexible browser may be any of application of a legacy broadcast communication service, Internet content of an EPG service Web-service, application on a PC, a flash, various contents of other mediums, etc. The corresponding content and the like may be encoded by the Ubiquitous server, and the encoded result may be directly transmitted as necessary.

A detailed description of the content encoding method of encoding processor is as follows.

In the service content encoding, the content encoding method for employing an alpha (α) value to reduce the amount of used network capacity when constructing the A/V interactive service is made available.

In case of a medium on which another service application is displayed under the condition that video regions of IPTV, DMB, and A/V are displayed, this medium may process the alpha (α) value for establishing transparency in graphic sources such that content or information can be simultaneously displayed on both the A/V video region and the service application region. The alpha (α) value is generally added to RGB values of graphic sources, such that four signals (Int) are transmitted. However, the establishing of the alpha (α) value is mostly fixed in one medium. The alpha (α) value is set using the aforementioned characteristics, only the RGB values of the graphic sources are transmitted over the network, and the amount of used network capacity can be reduced by about 1/4 because of non-transmission of the alpha (α) value.

In order to implement the aforementioned operations, when the client requests the service content under the A/V status, the content encoding method of the present invention also requests a specific value, and transmits the specific value without alpha (α) value. Meanwhile, if the content encoding method requests the service content without using the specific value, another method for further transmitting the alpha (α) value can be implemented.

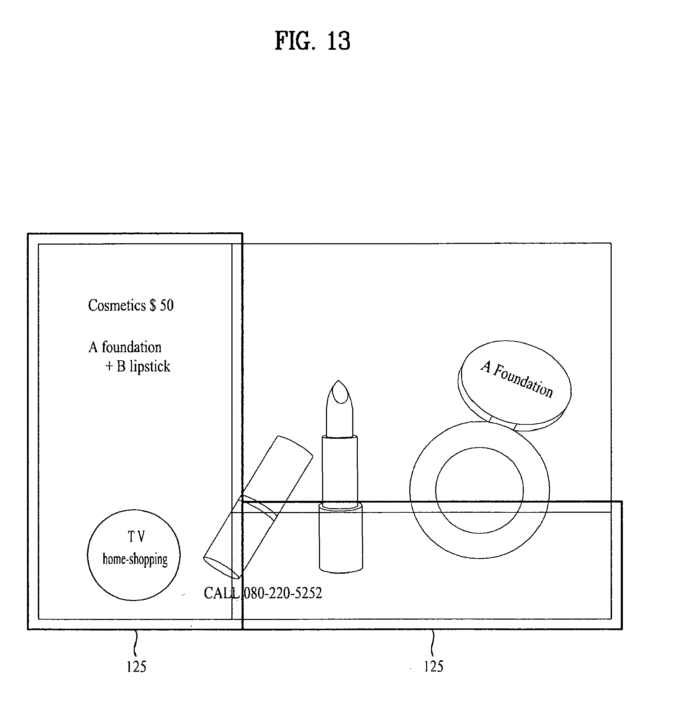

FIG. 13 shows an example of a content encoding method according to the present invention. In FIG. 13, the region enclosed by the edge 125 displays the screen image of the service content. The corresponding service content is configured in the form of a semi-transparent UI located on the A/V region.

If the Ubiquitous server transmits the alpha (α) value that performs semi-transparent processing of the encoded content, the alpha (α) value is also established in the RGB pixels of the corresponding region according to the UI screen configuration, and the established alpha (α) value is then transmitted. However, the alpha (α) value is generally established in the entire service configuration, such that the flexible browser and the content can define and use their alpha (α) values.

In the meantime, in accordance with a method for encoding changed response information, each of the screen of executed service and the constituent element is divided into a predetermined number of segments or regions and a method for retransmitting the divided segments or regions may be applied to the changed region.

Although transmission (Tx) data may be compressed and transmitted, most receiving terminals support low-specification hardware, such that it is necessary to recover the received compression file and provide the recovered file. In this case, the time required for the recovery may have a negative influence on the service, and it is preferable that the easily-decoded compression method such as non-length compression be used instead of an excessive compression method.

Partial data capable of being retransmitted may be any of image, text, and compiled class files that can be additionally used by each service.

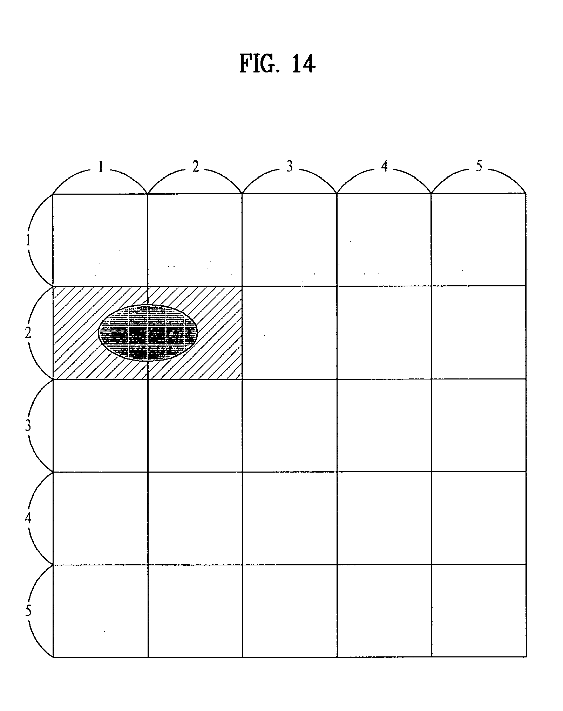

In other words, in the example of FIG. 14, partial data is retransmitted only to regions (1-2 and 2-2) each having the changed information.

In addition, the service does not continuously transmit the changed parts of not only the fixed changed part but also the constituent elements being operated with the predictable schedule, and transmits the constituent elements including the changed parts to the client, such that the changed operations can be processed by the client. As a result, according to the aforementioned scheme, network efficiency can be improved.

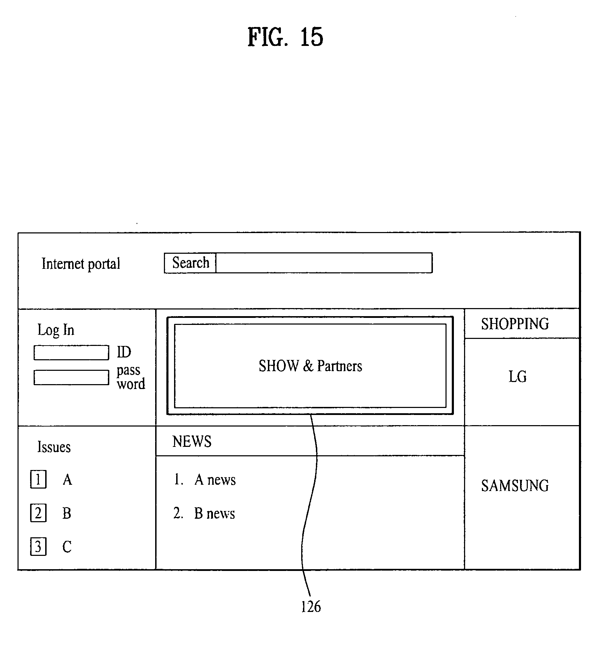

FIG. 15 shows a specific region of the Web-content. For example, the changed part of the flash advertisement region 126 is scheduled, all of individual constituent elements are transmitted, and the receiving terminal reconstructs the individual constituent elements and schedules/displays the reconstructed constituent elements.

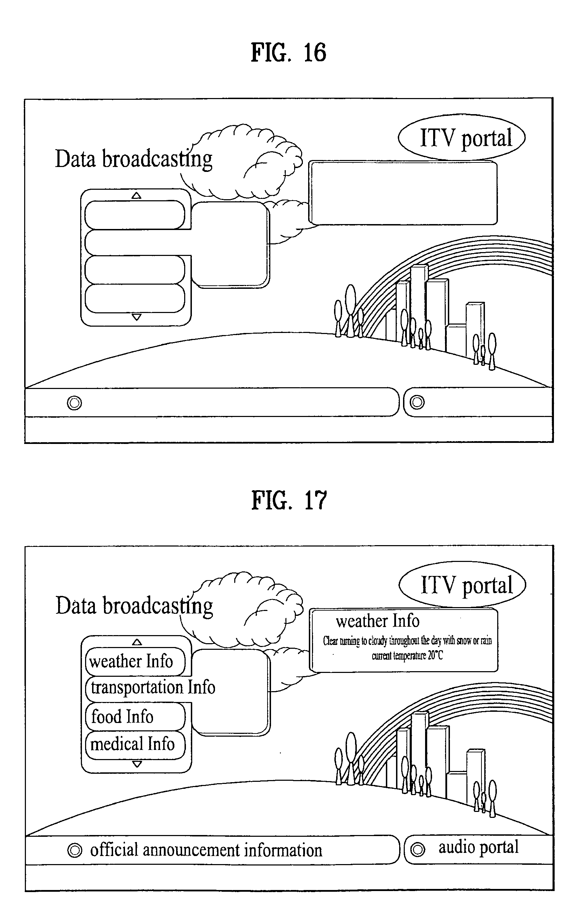

In the meantime, as an example of the method for encoding response information about the fixed region, in the embodiment of the present invention, in the case of using the service for constructing the static screen image, the entire background screen called a background is configured in the form of an I-frame (I frame) and the background I-frame screen is transmitted as shown in FIGS. 16 and 17. The background I-frame is pre-encoded and is ready to be transmitted.

The aforementioned I-frame usage method has an advantage in that hardware decoding is performed and the decoded result is displayed, such that CPU load can be reduced. In addition, if the encoding is performed at the resolution (720 x 480), the screen information of 800KB may be generally obtained. During the conversion to the I-frame, the screen information is reduced to 50KB, resulting in the implementation of the compression effect of transmission content.

That is, as shown in FIG. 16, the background of the service screen image is transmitted. As shown in FIG. 17, the changed information displayed on the background is displayed. In this case, information types may be text, compiled application data, and the like.

If required, it may be necessary for the flexible browser to perform processing of the pop-up of the open content. In other words, in case of the open content such as the Web content, the pop-up may be generated at random when a specific page is called according to content configuration. Under this situation, a detailed description of a method for sequentially processing the content focuses and processing the processed result in a virtual drive is as follows.

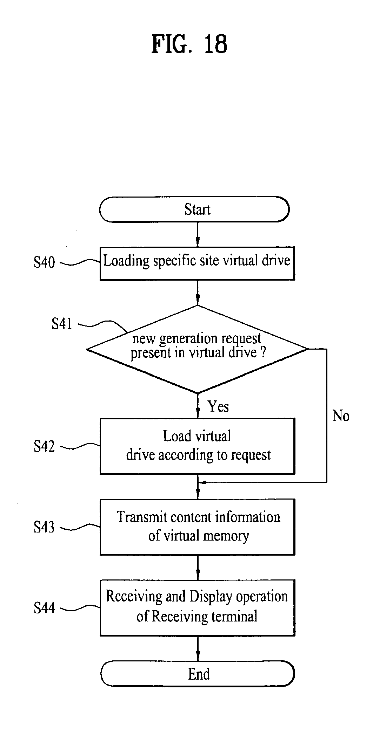

FIG. 18 is a flowchart illustrating a method for performing popup processing of open content using a flexible browser according to the present invention.

Referring to FIG. 18, if a client request calls a specific site, the specific site is loaded in the virtual drive at step S40.

In this case, it is determined whether a new generation request is present in the virtual drive at step S41. Therefore, if a request for calling a new object having the changed popup and focus is generated in the loaded specific site, the object, in which the new popup and focus are moving upon receiving a new request, is loaded and processed in a new virtual drive at step S42.

If no request occurs in the virtual drive, content information is transmitted to the content receiver of the virtual memory at step S43.

Systemically, an operation for loading content information in a new virtual drive and an operation for transmitting content information to the content receiver are asynchronously carried out. In contrast, one information is loaded in the virtual drive, is processed, and is then transmitted to the receiving unit, such that the loading, the processing and the transmitting may be sequentially displayed.

The content information of the virtual memory is transmitted to the receiving unit over the network.

Constituent elements of the received service are sequentially displayed at step S44. First, if the transmitted constituent elements are not displayed, the received constituent elements are ready to be displayed in the future.

Under the condition that the service focus of the receiving terminal is configured in a multiple format in the same manner as in a popup and a double-screen, if the focus is located on a previous screen and a specific button (e.g., Exit button) is pressed, the focused popup and constituent element disappear from the display screen.

In addition, when the constituent element such as the popup is encoded by the server, attribute information such as a location value is given such that the resultant elements can be displayed according to display characteristics of each medium.

A method for establishing synchronization between an event, that is generated from a remote-controller serving as an example of the user input unit and server content will hereinafter be described in detail.

In the remote-control service based on Windows, the focus movement between the remote client and the server is carried out by a mouse event. Generally, most Ubiquitous mediums do not have a mouse, a keyboard, etc. serving as a PC user interface (PC UI). For example, a simple operation unit configured in the form of a remote-controller is provided under the broadcast environment, and a keypad that includes number buttons and function buttons is provided on DMB and WIBRO terminals.

If a direction key (i.e., an arrow key) of the general system is pressed, coordinates of the client are changed, attribute information related to the changed coordinates is transmitted to the server, and the changed attribute information is then retransmitted.

In accordance with the user navigation method, an input signal is continuously entered by the interface so as to search for a desired focus position, and unnecessary network loss caused by the continual input may occur.

In order to solve the above-mentioned problem, a unit function of the server content is mapped to the user input event, facilitating navigation.

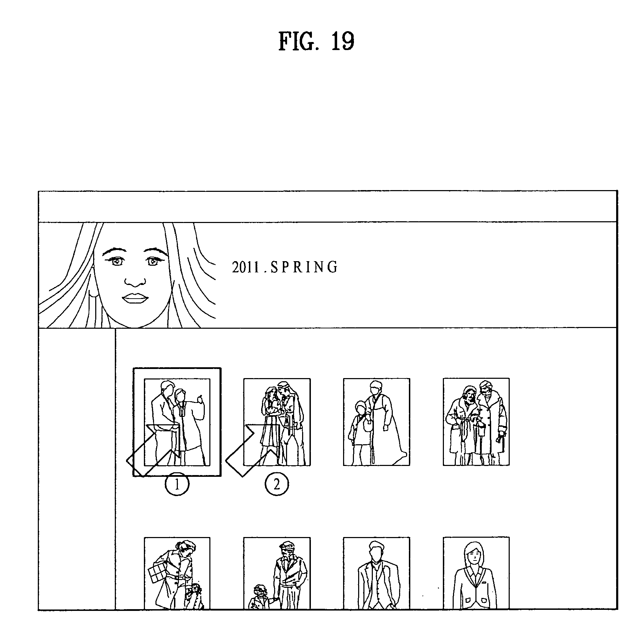

That is, in the example of FIG. 19, when the input focus moves from ① to ②, the legacy scheme continuously selects the right arrow (or right direction) button until the input focus is brought into contact with the focus, such that the focus indication mark (i.e., arrow mark) moves. Whenever the focus moves, the legacy system communicates with the server unit, such that it may again receive the position value from the server. Whenever the focus is selected, the legacy system is networked to the server unit.

In the meantime, in the case of using a navigation method in which the focuses sequentially move whenever a specific allocation key is selected, the service provider can easily allocate the priorities as well as to easily arrange the screen configuration. In accordance with the input specific allocation key, the navigation function of the content can be mapped.

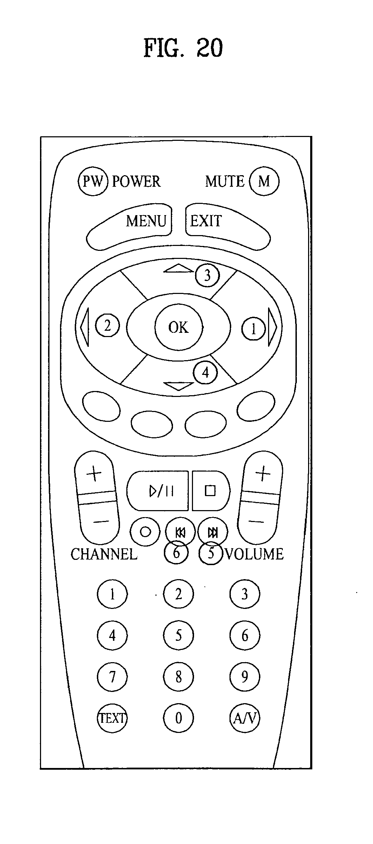

An example of the remote-controller event mapping is shown in FIG. 20. In FIG. 20, a specific allocation key may include color keys including arrow keys or special character keys, etc., and detailed descriptions thereof are as follows.

Function__right(): Function_right() is denoted by the number ① button. If the user presses the number ① button, the focus moves to a designated focus of the RIGHT direction.

Function_left(): Function_left() is denoted by the number ② button. If the user presses the number ② button, the focus moves to a designated focus of the LEFT direction.

Function_up(): Function_up() is denoted by the number ③ button. If the user presses the number ③ button, the focus moves to a designated focus of the UP direction.

Function_down() : Function_down() is denoted by the number ④ button. If the user presses the number ④ button, the focus moves to a designated focus of the DOWN direction.

Function_next(): Function_next() is denoted by the number (5) button. If the user presses the number ⑤ button, the focus moves to the next designated focus irrespective of RIGHT/LEFT/UP/DOWN directions.

Function_prev(): Function_prev () is denoted by the number ⑥ button. If the user presses the number ⑥ button, the focus moves to the previous focus irrespective of RIGHT/LEFT/UP/DOWN directions.

A single user input action may trigger movement among individual focuses. That is, if the user desires to move from the number ③ button to the number ④ button, the user only needs to press the RIGHT direction key mapped to Function_right(). The screen configuration arrangement may be arbitrarily carried out irrespective of RIGHT/LEFT/UP/DOWN directions. In this case, the order of focuses may be designated according to a service function and priorities.

Function_prev() indicates a function for moving to a previous-order focus. Function_next() indicates an example of a function for moving to the next-order focus.

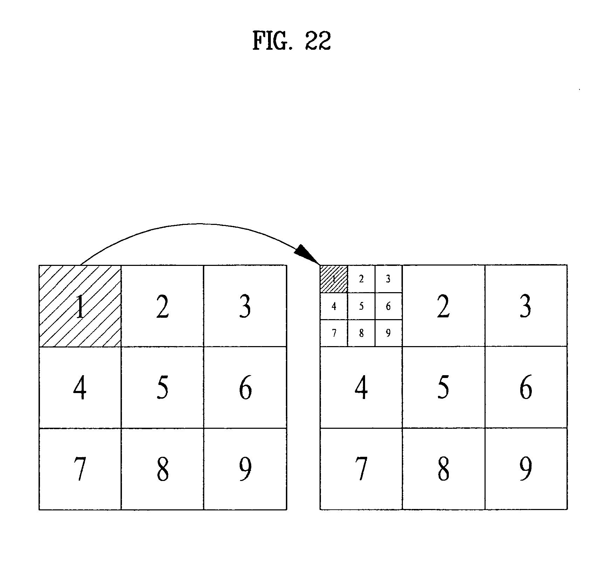

As shown in FIG. 22, the screen division information may be mapped to individual number buttons. FIG. 22 is a conceptual diagram illustrating a method for mapping screen division information using number buttons according to the present invention. That is, the number keypad may be used as a representative user input interface of the receiving terminal interacting with the Ubiquitous server. By means of the number keypad, a facilitated input method and a facilitated focus indication method may be implemented.

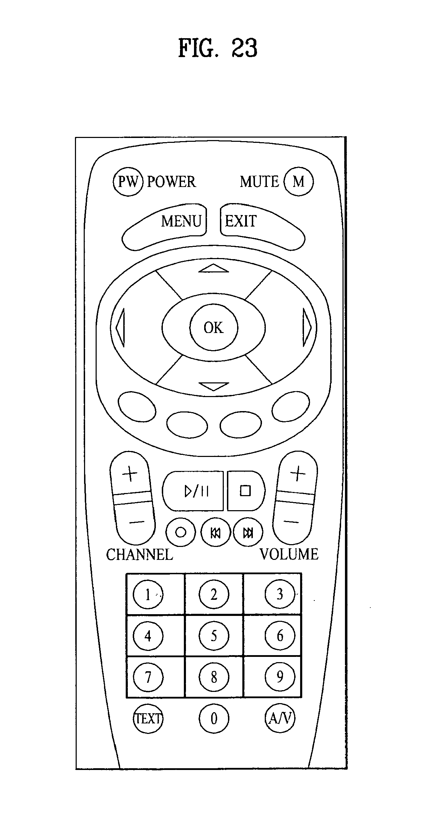

For example, the X-axis and Y-axis screen configuration elements of the receiving terminal may be divided in the same manner as the keypad 111 of the user input interface shown in FIG. 23.

If the number □ button of the interface is pressed, the screen part, except for a region around the number □ button is slightly dimmed (grayed), and focus-processed. In this case, if the user presses the number □ button again, the screen part, except for the region around the number □ button region is further dimmed (grayed), and focus-processed.

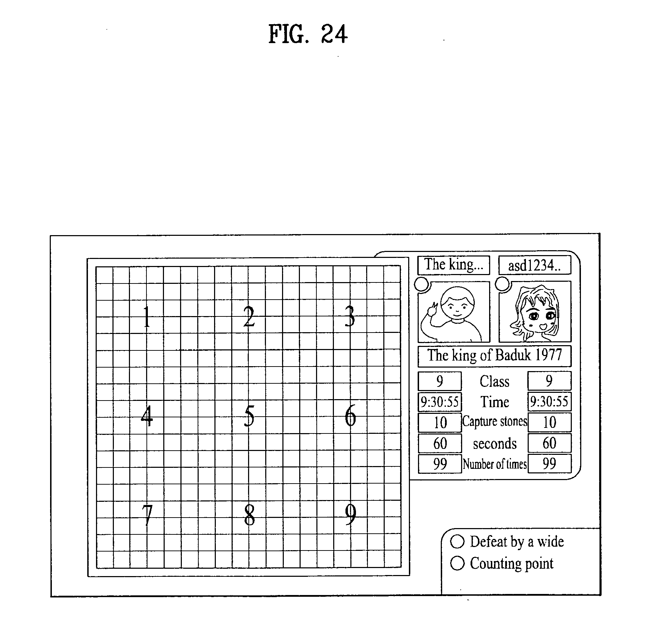

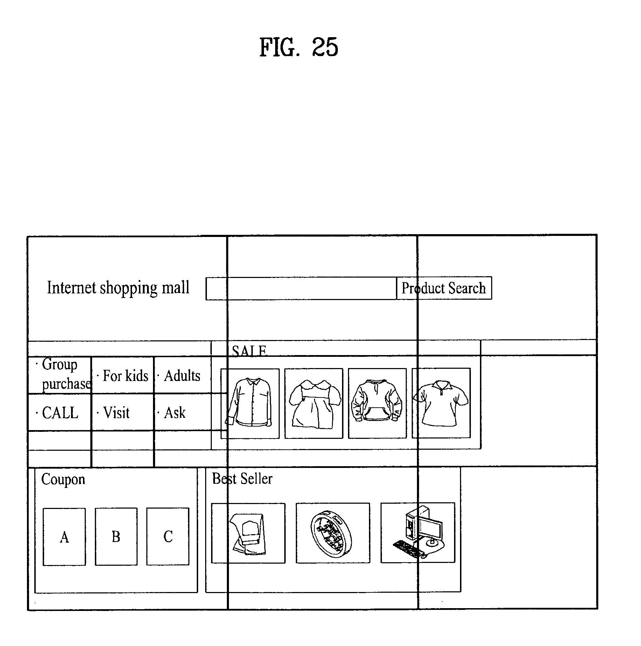

For example, the baduk service is shown in FIG. 24, and a method for performing divisional navigation of the Web-site in the open content is shown in FIG. 25.

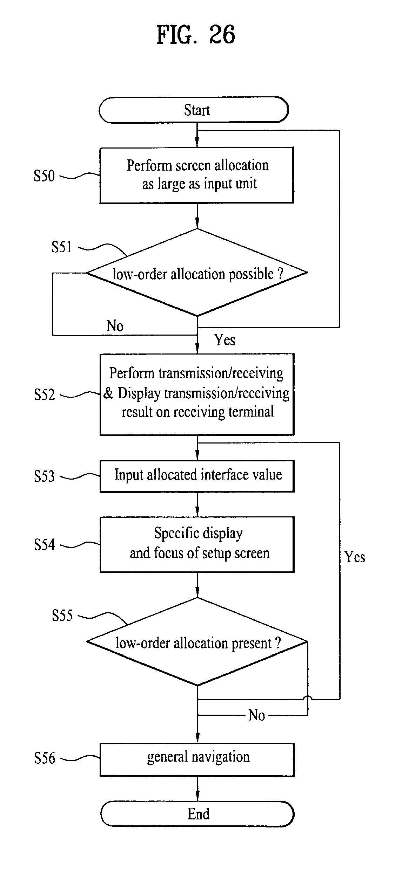

In addition, the focus division information may be mapped to the number buttons. The mapping may be applied to a service in which constituent navigation elements are arranged in a square. For example, this mapping can be easily applied to a specific example, such as baduk, janggi or chess, in which input focuses are distributed in the form of a square. FIG. 26 is a flowchart illustrating a method for employing content in which focus division is performed.

Referring to FIG. 26, the screen is scaled so as to cover the entirety of the input unit at step S50. For this operation, the focus division is performed in proportion to the input interface structure in the content generation process.

It is determined whether it is possible to perform low-order allocation at step S51. The focus may be self-divided according to the screen configuration of the service. If the low-order division region is present in the divided focus, the low-order focus is divided in the same manner as in the input interface structure.

If low-order allocation is impossible, information is transmitted and received, and the transmission/receiving result is displayed on the receiving terminal at step S52. The content upon which focus division is performed is transmitted from the server, and is received by the receiving unit, such that the received result is displayed on the receiving terminal. It is preferable that the input interface structure be displayed on the actual screen of the receiving terminal such that the user may easily use a hot key.

Next, the allocated interface value is input at step S53. In this case, a value of the interface allocated during content generation is selected.

A specific displaying and focusing on the established screen are performed at step S54. The focus moves to the divided screen, and it is preferable that the remaining regions other than the focused region be focusing-out processed (i.e., be grayed).

Next, it is determined whether the low-order allocation is present at step S55. If the low-order division region is present in the focused division region, the user enters the allocated interface value at step S53, and again moves to the low-order division region. Otherwise, a general navigation and service can be used at step S56.

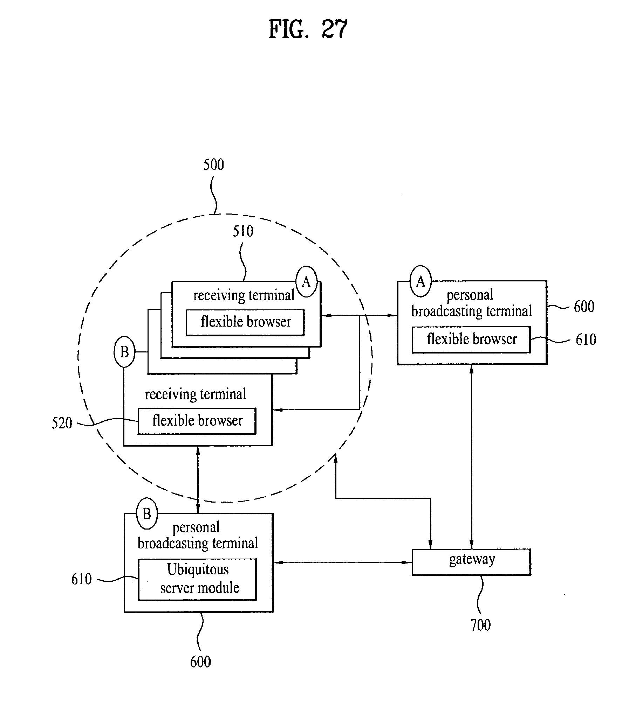

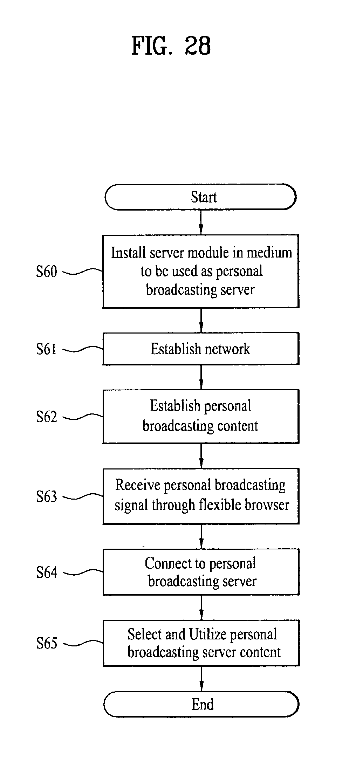

FIGS. 27 and 28 show examples of connection between the flexible browser and the personal broadcasting.

Referring to FIG. 27, the flexible browser 520 contained in the receiving terminal 510, the personal broadcasting terminal 600 including the Ubiquitous server 610, and the gateway are configured, such that network connection for personal broadcasting is made possible and thus personal broadcasting is also made possible.

In the Ubiquitous server module 610, function parts of the Ubiquitous server may be configured in H/W and S/W forms so as to implement personal broadcasting.

A personal computer (PC) may be used as a personal broadcasting terminal 600. Although the content to be personally broadcast may be moving images or files of the personal computer (PC), the scope or spirit of the content is not limited thereto and the content may be applied in various ways.

Personal broadcasting may consist of displaying content of the user's PC on the receiving terminal 510 through the flexible browser 520 of the receiving terminal 510. In addition, broadcasting between several receiving terminals is possible.

The network between the receiving terminal 510 and the personal broadcasting terminal 600 may be connected to the gateway 700. The network (ISP and private network) between mediums is achieved by connection between gateways 700 taking charge of the network of each medium.

In addition, the receiving terminal 510 and the personal broadcasting terminal 600 may be connected to each other by wire (i.e., physical network connection between an in-home broadcast receiving terminal and a PC).

Personal broadcasting can provide a legacy personal Internet broadcasting service, a P2P service, a home server function, etc., to a TV.

The group 500 of the receiving terminals may indicate a network of the medium of the receiving terminal 510's medium. A network of one group may be connected to a network of another group through the gateway 700.

The personal broadcasting terminal 600 may be any one of various mediums. Generally, the personal broadcasting terminal 600 may be a PC that is capable of easily generating, reproducing, and managing multimedia data.

The Ubiquitous server module 610 may be configured in hardware (H/W) or software (S/W) and distributed to the personal broadcasting terminal 600.

The Ubiquitous server module 610 is able to establish and manage content that will be broadcast to the broadcasting terminal 600 according to purposes of personal broadcasting. The personal broadcasting content may further include a variety of setup information, for example, authority setup, scheduling, the number of personal broadcasting users, etc.

The personal broadcasting terminal A and the receiving terminal A can be networked to each other through physical connection, and can also be networked to each other through the gateway belonging to the broadcast enterprise. In addition, through the gateway of the broadcast enterprise, the receiving terminal A is able to use the content of the other personal broadcasting terminal B.

In the aforementioned personal broadcasting, the connection between the flexible browser of the receiving terminal and the personal broadcasting will hereinafter be described with reference to FIG. 28.

FIG. 28 is a flowchart illustrating a system operation process for use in personal broadcasting according to the present invention. The flow of operations according to system configuration of the personal broadcasting will hereinafter be described with reference to FIG. 28.

Referring to FIG. 28, the server module is installed in a medium to be used as a personal broadcasting server at step S60. The Ubiquitous server module is constructed in the medium to be used as the personal broadcasting server. The Ubiquitous server module may take the form of hardware (H/W) or software (S/W) optimized for personal broadcasting.

Next, the network is established at step S61. The Ubiquitous server module may establish network information of the personal broadcasting server and network information of the broadcast receiving terminal through the gateway of the broadcast enterprise. The gateway and the Ubiquitous server module that belong to the broadcast enterprise record individual network information.

Next, the personal broadcasting content is established at step S62. In step S62, functions and contents to be broadcast by the personal broadcasting server are established. If the personal broadcasting server is a PC, setup information about moving-image mails and various application programs may be established in the PC.

Each function may also be denoted by an icon serving as a hot key. If the personal broadcasting server is completely established and enters the on-air status, this means that the personal broadcasting data can be received, such that the on-air signal is transmitted to the gateway of the broadcast enterprise and a signal indicating a broadcast-enable status is also transmitted to the gateway.

Next, the flexible browser receives the personal broadcasting signal at step S63. The flexible browser of the receiving terminal confirms broadcast states of the personal broadcasting servers through the gateway of the broadcast enterprise.

In addition, the flexible browser is connected to the personal broadcasting server capable of receiving broadcast signals at step S64. When the flexible browser is connected to the personal broadcasting server, a viewing limitation (i.e., rating) mode may be added to broadcast data by the broadcast viewing authority or setup of the personal broadcasting server.

After that, the personal broadcasting server can select and use the content at step S65. The user or viewer views the content of the personal broadcasting server and the list of functions through the flexible browser, such that the user or viewer can select, receive, and use the content.

Meanwhile, the Ubiquitous system according to the present invention may be interoperable with information of a general broadcast system so as to provide content.

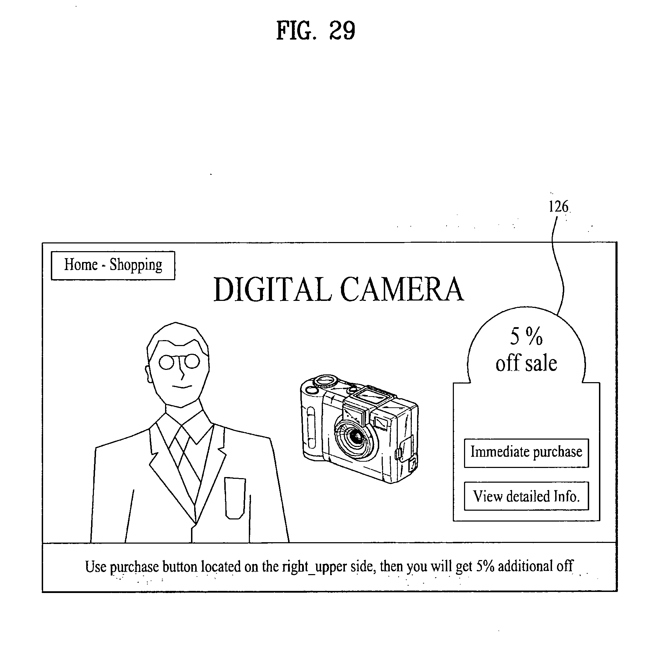

FIG. 29 shows an example of interaction between a general system and an event according to the present invention. In the example shown in FIG. 29, the service content 126 interacting with the home-shopping broadcast program is A/V-interaction processed such that the broadcast program information is configured and the resultant broadcast program information such as PSIP/SI is managed by the event management server. The programmed A/V broadcast program is compression-multiplexed by the broadcast headend(H/E) and is transmitted to the transmitter over the network.

In this example, the Ubiquitous server transmits the service content 126 interacting with the home-shopping A/V program, and the flexible browser of the receiver performs interactive processing.

While the user views the corresponding home-shopping A/V program, the service content 126 may be executed. If the home-shopping program ends or the user switches to another service, the service content 126 is automatically completed.

The service content 126 may be located to one side of the screen so as not to hinder the user's ability to view the home-shopping A/V program. If necessary, the service content 126 may be displayed semi-transparently on the screen.

Next, an example of the event non-interaction (i.e., an example of an independent program (UCC, TV open market, etc.) irrelative to a time-line event) will hereinafter be described in detail.

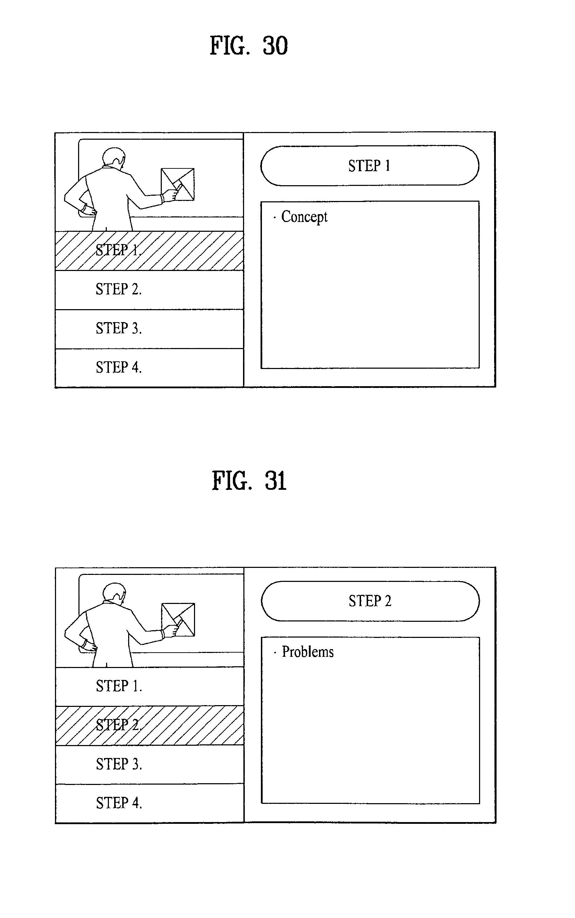

FIGS. 30 to 33 show examples for controlling detailed schedules within one content according to the present invention. A method for performing detailed scheduling within one content is shown in FIGS. 30 to 33. FIGS. 30 to 33 show examples of screen images and scenarios that are displayed on the receiving terminal under the condition that the Ubiquitous content belonging to the education program is received while the educational broadcasting (EBS) channel program is viewed.

As shown in FIGS. 30 to 33, the service content includes four screen images from FIG. 30 to FIG. 33.

In this case, if a specific condition (e.g., information about whether the user views the corresponding channel or when a predetermined time is reached) is provided during the viewing time of the program, content information is transmitted such that the resultant content is displayed on the screen.

For example, the screen schedule of the content is established as follows.
FIG. 30 : 07:20 PM □ 07:22 PM on EBS channel
FIG. 31 : 07:22 PM □ 07:24 PM on EBS channel

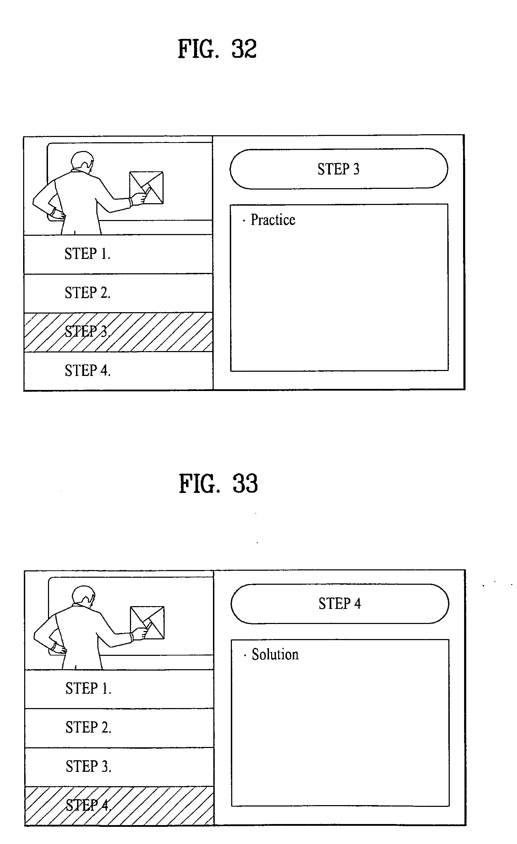

FIG. 32 : 07:24 PM □ 07:26 PM on EBS channel
FIG. 33 : 07:26 PM □ 07:29 PM on EBS channel

Individual screen images are automatically updated at corresponding times, such that the updated images are displayed on the screen at the corresponding times.

A variety of methods for guaranteeing higher performance and stability when the Ubiquitous server transmits content information to the receiving terminal over the network using the distribution processor will hereinafter be described in detail. In the guaranteeing methods, content distribution is performed according to indication characteristic identical to that of the transmitted content channel, access maintenance characteristic through a session, and different formats based on content types, thus providing the divided content. Detailed descriptions of individual methods are as follows.

### 1. Distribution method using indication characteristic

Pre-generated and encoded service content information is configured on the basis of indication information such as a channel. This indication information is grouped and the distribution processor provides high-order indication information, such that a network distribution effect is achieved.

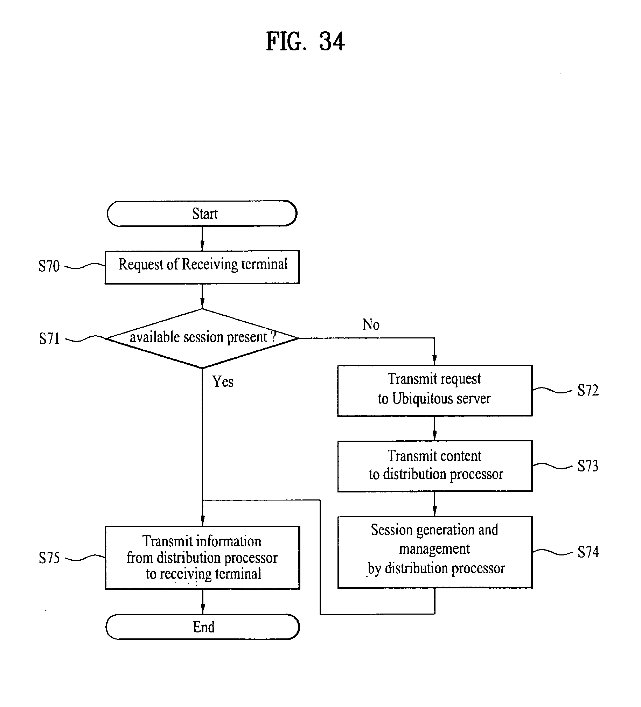

### 2. Distribution method using access maintenance characteristic (See FIG. 34).

Upon receiving a request from the receiving terminal, the distribution processor transmits the service content information. The distribution processor retains the corresponding information for a specific amount of time. If a service usage time is not present, the distribution processor removes the corresponding information.

### 3. Distribution method using content formats

The service type is classified into fixed service information and variable service information. The format of the fixed service information is fixed. The variable service information is changed according to a user input signal. Specifically, most walled-garden-shaped services generally have fixed service information. If this fixed information is pre-encoded, the encoded information is immediately transmitted as soon as the distribution processor outputs a request, such that the network distribution effect is achieved.

In accordance with the present invention, the content is retained in the distribution processor according to individual sessions, and the content can be transmitted to the receiver whenever a request occurs. Session may be managed according to a specific time and period or may also be managed according to the screen and usage formats.

FIG. 34 is a flowchart illustrating operations of a distribution processor according to the present invention. Steps of the distribution method that uses the access maintenance characteristic will hereinafter be described with reference to FIG. 34.

Referring to FIG. 34, the receiving terminal requests the service content at step S70.

After requesting the service content, it is determined whether a session corresponding to the information requested for the distribution processor is activated.

If the session is activated, information of the distribution processor is directly transmitted to the receiving terminal at step S72. If the activated session is not present at step S72, the distribution processor requests the corresponding information from the Ubiquitous server at step S73.

If an information request is completed, the Ubiquitous server encodes the corresponding information and transmits the encoded information to the distribution processor at step S74. In addition, the distribution processor transmits the corresponding information to the receiving terminal at step S75.

In this way, the distribution processor can generate and manage sessions. If the distribution processor generates a new session, it establishes a specific time such that it maintains the session during the established time.

In addition, if the user's request is not regenerated during the specific time, the session is removed such that resources of the distribution processor can be guaranteed.

The method disclosed in the present invention may be implemented in the form of program commands executable by a variety of computer means, and recorded on a computer-readable recording medium. The computer-readable recording medium may include program commands, data files, data structures, etc. individually or in combination. The program commands recorded on the medium may be specially designed and configured for the present invention or ones known and available to those skilled in computer software. Examples of the computer-readable recording medium include magnetic media such as a hard disk, a floppy disk and a magnetic tape, optical media such as a compact disc read only memory (CD-ROM) and a digital versatile disc (DVD), magneto-optical media such as a floptical disk, and hardware devices specially configured to store and execute program commands, such as a ROM, a random access memory (RAM) and a flash memory. Examples of the program commands include high-level language code that may be executed by a computer using an interpreter, etc., as well as machine language code such as is produced by a compiler. The above-stated hardware devices may be configured to operate as one or more software modules to perform the operation of the present invention, and vice versa.

Although the present invention has been described in conjunction with the limited embodiments and drawings, the present invention is not limited thereto. Those skilled in the art will appreciate that various modifications, additions and substitutions are possible from this description. Therefore, the scope of the present invention should not be limited to the description of the exemplary embodiments and should be determined by the appended claims and their equivalents.

### [Mode for Invention]

Various embodiments have been described in the best mode for carrying out the invention.

### [Industrial Applicability]

As apparent from the above description, embodiments of the present invention may be wholly or partially applied to a digital broadcasting system.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A system for providing an interactive content service of a Ubiquitous environment comprising:
an information generator for receiving content transmitted from an information provider including a content providing medium, processing the received content such that a receiver implements a content service screen and/or a content service control function, and transmitting the processed content; and
a network for providing communication between the information generator and the receiver.

2. The system according to claim 1, wherein the network performs a function that includes user authentication and/or network load distribution.

3. The system according to claim 1, wherein the information generator includes:
a broadcast headend (H/E) for compressing and multiplexing broadcast sources, and transmitting the multiplexed result to the receiver over the network; and
an event management server for matching channels and schedules of broadcast programs to the broadcast sources, compressing and multiplexing the matched result, and transmitting the multiplexed result to the receiver.

4. The system according to claim 1, wherein the information generator includes:
a content manager for managing the content transmitted from the information provider; and
a Ubiquitous server for receiving the content from the content manager, processing the received content such that the receiver implements a content service screen and a content service function, and transmitting the processed content.

5. The system according to claim 4, wherein the information generator further includes a distribution processor for performing distribution processing of information received from the Ubiquitous server.

6. The system according to claim 4, wherein the Ubiquitous server includes:
a virtual drive manager for analyzing a type and value of a signal received by the receiver according to individual requests, and managing generation data for each request;
an encoding processor for performing protocolization of service sources and metadata of the content to be transmitted; and
an event manager for performing interaction of at least one of indication information, program schedule information, content management information, and screen configuration information of the transmitted content.

7. The system according to claim 6, wherein the virtual drive manager uses the input signal received from the receiver, generates video information and audio information as response information, and transmits the response information to the encoding processor.

8. The system according to claim 4, wherein the receiver includes a flexible browser for transmitting attribute information to the Ubiquitous server on the basis of medium attribute information for each medium, receiving the content information, and displaying the received content information.

9. The system according to claim 4, wherein the receiver includes a protocol manager for transmitting a request to the Ubiquitous server, performing protocolization of additional information generated from the receiver, and transmitting the protocolized information to the Ubiquitous server.

10. The system according to claim 5, wherein the distribution processor performs the distribution processing using either load distribution including a channel management function, a session management function, and a service resource management function, or channel distribution of a broadcast service.

11. A system for providing an interactive content service of a Ubiquitous environment comprising:
a Ubiquitous server for receiving content transmitted from a content providing medium, processing the received content such that at least one receiving terminal implements a content service screen and/or a content service control function, and transmitting the processed content; and
a network for providing communication between the Ubiquitous server and the at least one receiving terminal.

12. A method for providing an interactive content service of a Ubiquitous environment comprising:
a) receiving content from an information provider including a content providing medium;
b) processing the received content such that a receiving terminal implements a content service screen and/or a content service control function for the content; and
c) transmitting the processed content to the receiver over a network.

13. The method according to claim 12, wherein the processing step (b) includes:
compressing/multiplexing broadcast sources, and transmitting the multiplexed result to the receiver over the network; and
matching channels and schedules of broadcast programs to the broadcast sources, compressing/multiplexing the matched result, and transmitting the multiplexed result to the receiver.

14. The method according to claim 12, wherein the step (b) includes:
analyzing a type and value of an input signal of the receiver according to individual requests, and employing the analyzed type and value, thus generating video information and audio information as response information;
performing an encoding process to protocolize service sources and metadata of the content to be transmitted on the basis of the generated response information; and
performing interaction of at least one of indication information, program schedule information, content management information, and screen configuration information of the transmitted content.

15. The method according to claim 12, further comprising:
after performing the processing step (b), performing distribution processing upon the processed result.

16. The method according to claim 15, wherein the performing of the distribution processing includes:
performing either load distribution in which a channel management function, a session management function, and a service resource management function are performed, or channel distribution of a broadcast service.

17. A computer-readable recording medium comprising:
a computer program for executing any one of methods according to claims 12 to 16.
